Europäisches Patentamt

European Patent Office

Office européen des brevets

(19)

(11) Numéro de publication: **0 296 924**
**A1**

## (12) DEMANDE DE BREVET EUROPEEN

(21) Numéro de dépôt: **88401422.6**

(22) Date de dépôt: **10.06.88**

(51) Int. Cl.⁴: **G 01 N 21/88**

(30) Priorité: **16.06.87 FR 8708398**

(43) Date de publication de la demande:
**28.12.88 Bulletin 88/52**

(84) Etats contractants désignés:
**CH DE FR GB IT LI**

(71) Demandeur: **INSTITUT TEXTILE DE FRANCE**
**35, rue des Abondances, B.P. 79**
**F-92105 Boulogne-Billancourt Cédex (FR)**

**UNIVERSITE DE HAUTE ALSACE**
**2, rue des frères Lumière**
**F-68093 Mulhouse Cédex (FR)**

(72) Inventeur: **Exbrayat, Pierre Elisée**
**11, rue Jean Montavont**
**F-68200 Mulhouse (FR)**

**Gresser, Julien**
**3, rue des Oeillets**
**F-68170 Rixheim (FR)**

(74) Mandataire: **Bertrand, Didier et al**
**Cabinet Beau de Loménie 55, rue d'Amsterdam**
**F-75008 Paris (FR)**

(54) **Procédé optique de contrôle de surfaces textiles.**

(57) Le procédé consiste à soumettre un élément de la surface textile (7) à contrôler à un flux lumineux cohérent, à traiter optiquement la lumière transmise ou réfléchie de manière à obtenir le spectre de diffraction dudit élément (7), à superposer ce spectre à l'hologramme enregistré (6) d'un élément , dit de référence, de la même surface textile, dans le plan focal avant d'une lentille de Fourier (9), moyennant quoi on réalise la fonction d'intercorrélation de la surface à contrôler (7) et de la référence enregistrée sur l'hologramme 6, et à exploiter les données de la fonction d'intercorrélation.

L'exploitation des données consiste notamment à comparer à l'intensité du pic central de la fonction d'auto-corrélation les données de la fonction d'intercorrélation dans la zone de fréquence correspondant audit pic.

FIG 4

EP 0 296 924 A1

# Description

## PROCEDE OPTIQUE DE CONTROLE DE SURFACES TEXTILES

La présente invention concerne le contrôle automatique de surfaces textiles en déplacement, soit lors de leur fabrication sur machine de production soit lors d'une opération de contrôle. Elle concerne notamment un procédé de détection et de classification des défauts.

Dans le présent texte, le terme surfaces textiles sera employé pour désigner principalement des tissus ou des tricots; cependant l'invention peut également s'appliquer au contrôle automatique des fils eux-mêmes qui sont aussi des éléments surfaciques dont la largeur est égale au diamètre du fil.

Dans la pratique, le contrôle des surfaces textiles est effectué, une fois que le tissu ou le tricot est déjà entièrement terminé, lors d'une opération complémentaire appelée visitage. Cette opération consiste à dérouler la pièce de tissu sur une table devant un opérateur qui contrôle visuellement la qualité de la pièce ; l'opérateur arrête le déroulement de la pièce lorsqu'il voit un défaut et positionne en lisière une sonnette de repérage du défaut.

Le visitage tel que décrit demande un personnel très attentif ; il reste cependant une source d'erreurs . On a déjà proposé de remplacer le visitage humain par un contrôle automatique et optique mettant en oeuvre une source lumineuse et l'analyse du flux lumineux, après réflexion ou transmission sur le tissu, par transformation de la lumière incidente en signaux électriques. Le matériel est très sophistiqué, et très coûteux ; il permet des vitesses élevées de déroulement du tissu lors du visitage , mais ne convient qu'à des articles écrus et présentant une armure simple.

On a proposé, dans le brevet EP 0 162 134, un dispositif de contrôle automatique de tissu qui est monté soit directement sur le métier à tisser soit sur une table de visite indépendante. Dans ce dispositif électro-optique on utilise un capteur se déplaçant au-dessus du tissu et on réalise une inspection fil à fil préférentiellement selon les fils de chaîne, le flux lumineux incident sur le tissu ayant une forme rectangulaire très allongée.

Dans les dispositifs cités ci-dessus les signaux lumineux représentatifs du tissu subissent un traitement électronique, dans le but de déceler la présence de défauts dans le tissu, par comparaison avec les informations similaires mises en mémoire pour un tissu de référence sans défaut. Un tel traitement électronique est long et nécessite la conception d'un logiciel complexe et la mise en place d'une unité de calcul.

On a également proposé dans le brevet américain 3,633,037, un dispositif de contrôle automatique de tissu dans lequel on soumet un élément de la surface textile à un flux lumineux spatialement cohérent, on traite optiquement la lumière transmise de manière à obtenir le spectre de diffraction de l'élément de surface et on exploite les données du spectre de diffraction. En particulier ce brevet enseigne de surveiller l'évolution du rapport des intensités des pics du spectre de diffraction, qui est une fonction de l'épaisseur des fils constitutifs du tissu.

Cependant le dispositif précité peut, dans certains cas, manquer de précision puisqu'il prend en compte un nombre restreint de paramètres et qu'il n'appréhende pas l'ensemble des informations contenues dans le spectre de diffraction.

Or on a trouvé et c'est ce qui fait l'objet de l'invention un procédé de contrôle automatique d'une surface textile en déplacement qui pallie l'inconvénient constaté. Le procédé est du type décrit par le brevet américain 3,633,037. Selon l'invention il consiste à superposer le spectre de diffraction de l'élément de la surface textile à contrôler à l'hologramme d'une partie au moins de la même surface textile , dénommée référence, dans le plan focal avant d'une lentille de Fourier, moyennant quoi on réalise la fonction d'intercorrélation de la surface à contrôler et de la référence enregistrée sur l'hologramme, et à exploiter les données de la fonction d'intercorrélation obtenue.

Dans le cas où la surface contrôlée ne présente pas de défaut et où l'élément de référence est lui-même sans défaut, la corrélation qui est alors réalisée se présente sous la forme d'une auto-corrélation puisque les deux éléments sont identiques. La fonction d'auto-corrélation comporte un pic central caractéristique. Dans le cas où la surface textile contrôlée présente un défaut, la fonction d'intercorrélation va présenter un pic d'intensité différente voire même ne va plus présenter de pic. L'exploitation des données de la fonction d'intercorrélation consiste notamment à comparer à l'intensité du pic central de la fonction d'auto-corrélation les données de la fonction d'intercorrélation dans la zone correspondant audit pic. En effet le pic central de la fonction d'auto-corrélation étant représentatif de l'état de ressemblance des éléments de surface ayant donné lieu d'une part à l'hologramme et d'autre part au spectre de diffraction, toute variation dans cette ressemblance va entraîner une variation dans l'intensité et la forme du pic central.

De préférence la référence consiste dans la surface textile à contrôler et l'hologramme que l'on superpose au spectre de diffraction est l'hologramme d'un élément de cette surface prise dans son intégralité et choisi pour être sans défaut.

Mais on peut également mettre en oeuvre comme référence des parties de la surface textile à contrôler. Par exemple dans le cas d'un tissu, la référence consisterait dans uniquement le réseau des fils de chaîne ou dans uniquement le réseau des fils de trame ou dans uniquement la partie répétitive de l'armure, sans que cette liste soit exhaustive. Dans le cas où la surface contrôlée ne présente pas de défaut, la corrélation réalisée entre le spectre de diffraction de l'élément de surface et l'hologramme de la référence qui n'est qu'une partie de ce même élément de surface se traduit aussi par une fonction d'auto-corrélation qui présente un pic central caractéristique. Ainsi en décomposant la surface textile en plusieurs références, il devient possible de déceler l'origine de la variation éventuelle de la ressemblance, par l'exploitation des superpositions données provenant des fonctions d'intercorrélation à partir du même spectre de diffraction avec les hologrammes des différentes références.

Le spectre de diffraction est généralement obtenu en interposant sur le parcours d'un flux lumineux cohérent une lentille dite de Fourier ; il se situe dans le plan focal de ladite lentille . Il consiste en un ensemble de taches lumineuses dont l'intensité , l'étendue, la disposition sont fonction du flux lumineux incident et du matériau contrôlé.

L'hologramme de référence qui est le spectre de diffraction de l'élément de référence est obtenu par enregistrement sur une plaque holographique dudit spectre. L'hologramme ainsi enregistré représente une mémoire de la surface textile sans défaut qui sera, selon l'invention, comparée en permanence à la surface que l'on veut contrôler. L'enregistrement de l'hologramme nécessite de faire tomber , dans le plan focal arrière de la lentille de Fourier, un faisceau du flux cohérent de sorte que l'onde diffractée correspondant au spectre de diffraction et l'onde provenant du flux cohérent aient la même courbure en tout point de la plaque holographique.

On peut également réaliser l'hologramme de référence par calcul au moyen d'ordinateur, sur la base du cahier des charges de l'élément de référence. Cette technique de réalisation d'hologrammes synthétiques est maintenant connue de l'homme du métier : en particulier dans l'article publié par the International Society for Optical Engineering (volume 437) et intitulé : "Optical data processor using computer generated hologram for high energy physics experiments."

La corrélation est obtenue par voie optique dans le plan focal arrière d'une lentille de Fourier qui est placée de telle sorte que la superposition du spectre de diffraction et de l'hologramme de référence soit dans son plan focal avant. L'exploitation des données de la fonction d'intercorrélation est obtenue grâce à des moyens de détection placés dans le plan focal arrière de cette lentille de Fourier, par exemple des cellules CCD, des cellules voltaïques ou encore une caméra, assortis de moyens de comparaison et de moyens d'alarme ou d'arrêt de l'installation.

Dans un mode particulier de l'invention, le procédé de controle automatique d'une surface textile en déplacement combine l'exploitation des données de la fonction d'intercorrélation et l'exploitation d'au moins un paramètre provenant du spectre de diffraction, par exemple $I_o$ et

$$\frac{I_o}{I_1}$$

$I_o$ et $I_1$ étant les intensités des pics d'ordre 0 et 1.

Ainsi il est possible de mettre en oeuvre les moyens caractéristiques de la présente invention pour la vérification des résultats obtenus par la solution enseignée par le brevet américain 3,633,037.

La combinaison de ces deux techniques est rendue possible en interposant sur le trajet du flux lumineux cohérent entre la surface textile à contrôler et la lentille de Fourier une grille formant un réseau dont le pas est largement inférieur au diamètre des fils contitutifs de la surface textile, moyennant quoi on obtient une multiplicité de spectres de diffraction identiques et décalés les uns par rapport aux autres dans le plan focal arrière de la lentille de Fourier , et on exploite les données d'un spectre de diffraction donné tandis qu'on superpose un hologramme de référence sur un autre spectre de diffraction.

Cette même disposition est mise à profit pour l'exploitation des fonctions d'intercorrélation du spectre de diffraction avec différents hologrammes de référence. Dans ce cas on superpose chacun des différents hologrammes de référence à l'un des spectres de diffraction obtenu grâce à l'utilisation de la grille. On peut également, en fonction du nombre de spectres de diffraction disponibles, superposer des hologrammes correspondant à des défauts types de manière à obtenir une certaine classification des défauts présentés par la surface à contrôler. On comprend que dans ce dernier cas, la fonction d'auto-corrélation présentant un pic central caractéristique correspondra , pour l'hologramme d'un défaut donné, à la présence dudit défaut sur la surface textile contrôlée.

L'invention sera mieux comprise grâce à la description qui va être faite d'un exemple de réalisation et au dessin annexé dans lequel :

La figure 1 est une représentation symbolique du réseau de fils selon une dimension,

La figure 2 est une représentation graphique du spectre de diffraction,

La figure 3 est une représentation schématique du montage optique d'enregistrement d'un hologramme de référence,

La figure 4 est une représentation schématique du montage optique de corrélation,

La figure 5 est une représentation graphique de la fonction d'auto-corrélation pour un tissu sans défaut.

Une surface textile résulte de l'entrecroisement de différents fils, que ce soit en tissage ou en tricotage. Nous retiendrons dans la suite de cet exposé le cas du tissu qui est plus simple , mais sans que cela soit limitatif de l'invention. Le tissu consiste en l'entrecroisement régulier de fils horizontaux, que sont les fils de trame ou duites , et de fils verticaux que sont les fils de chaîne. Cet entrecroisement est identique tout au long du tissu pour une armure donnée. Les fils de chaque type (duites et fils de chaîne) sont juxtaposés les uns aux autres et séparés par des intervalles plus ou moins importants , en fonction du serrage du tissu ou du duitage.

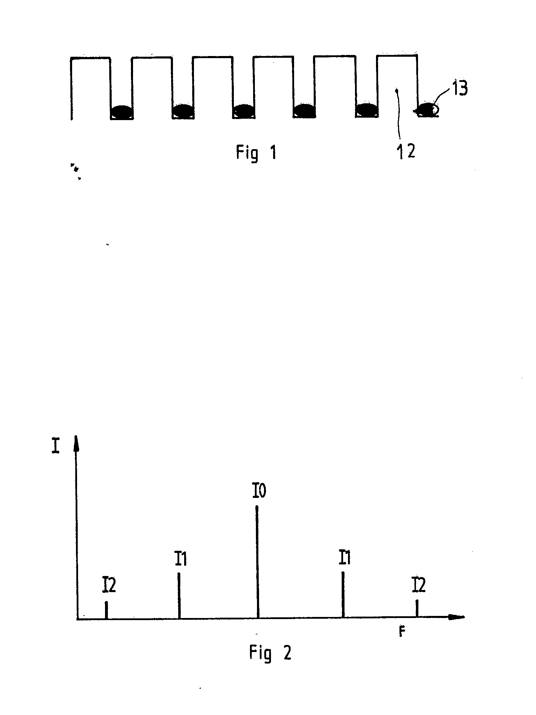

Le tissu est éclairé par un flux de lumière cohérente, provenant d'un laser à Hélium-Néon de longueur d'onde 0,634 micromètre et de puissance 20 mW et traversant un élargisseur de faisceau ; le tissu est partiellement traversé par le flux lumineux qui est alors modulé par le réseau constitué par les fils du tissu. On a représenté sur la figure 1 très schématiquement la juxtaposition des fils de trame 13 et l'évolution de l'intensité du flux transmis à travers le réseau. Lorsque le flux incident rencontre un fil 13,il est réfléchi ou absorbé et l'intensité du flux transmis est nulle ; lorsqu'il est au niveau d'un intervalle 12,il traverse le tissu et le flux transmis présente une intensité donnée. On comprend que la réalité est beaucoup plus complexe que la représentation de la figure 1, puisqu'interviennent la diffraction ,les fils de chaîne, la pilosité des fils etc...

On a représenté sur la figure 2 le diagramme d'un spectre de diffraction d'un flux lumineux tel que modulé par un tissu selon la figure 1 , avec en abscisses les fréquences et en ordonnées l'intensité lumineuse. Ce diagramme comporte une série de pics ; un pic central d'ordre zéro et d'intensité $I_o$, entouré de deux pics plus petits d'ordre - 1 et 1 d'intensité $I_1$ , l'ensemble de ces pics étant entouré de deux pics encore plus petits d'ordre -2 et 2 d'intensité $I_2$. Là encore dans la réalité les pics ne sont pas aussi réguliers, par exemple les pics d'ordre -1 et 1 n'auront pas la même intensité . Cependant dans tous les cas l'ensemble du spectre de diffraction est représentatif de la surface du tissu sur lequel le flux lumineux a été projeté.

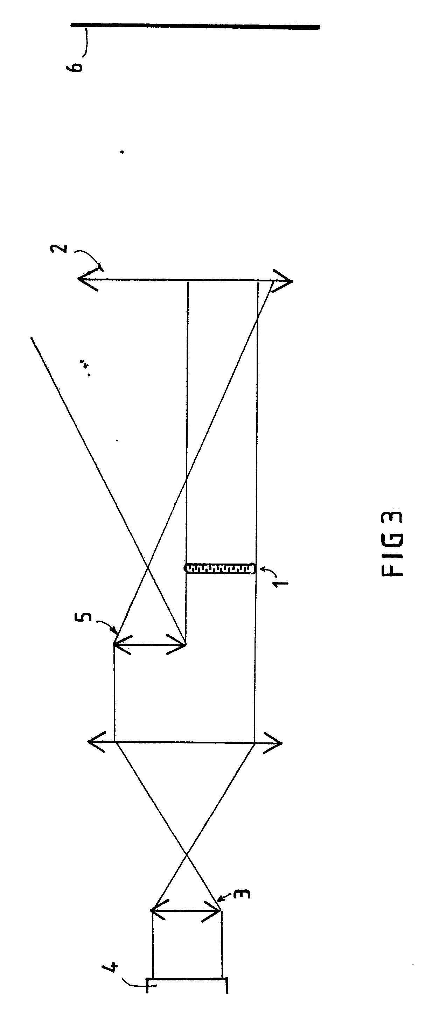

Le montage illustré par la figure 3 permet l'enregistrement de l'hologramme par exemple d'un tissu de référence 1. Il comprend une lentille de Fourier 2 d'une distance focale de 400 mm, un élargisseur de faisceau 3 portant à 70 mm le flux de lumière cohérente, provenant d'un laser 4 à Hélium-Néon de longueur d'onde 0,634 micromètre et de puissance 20 mW, et une lentille convergente 5 de distance focale 80 mm. La lentille convergente 6 est placée de telle sorte que son plan focal arrière corresponde référence dont on veut obtenir l'hologramme. Ainsi l,onde diffractée par le tissu et l'onde de référence ont la même courbure en tout point de la plaque holographique 6 placée dans le plan focal de la seconde lentille de Fourier.

L'enregistrement de l'hologramme s'obtient en plaçant un obturateur photographique à la sortie du laser 1 qui permet de régler le temps d'exposition nécessaire, de l'ordre de 10 secondes. Après enregistrement on développe la plaque comme on le ferait d'une plaque photographique : l'hologramme de référence est utilisable dans le montage suivant correspondant à l'intercorrélation et qui est le montage servant au contrôle automatique du tissu.

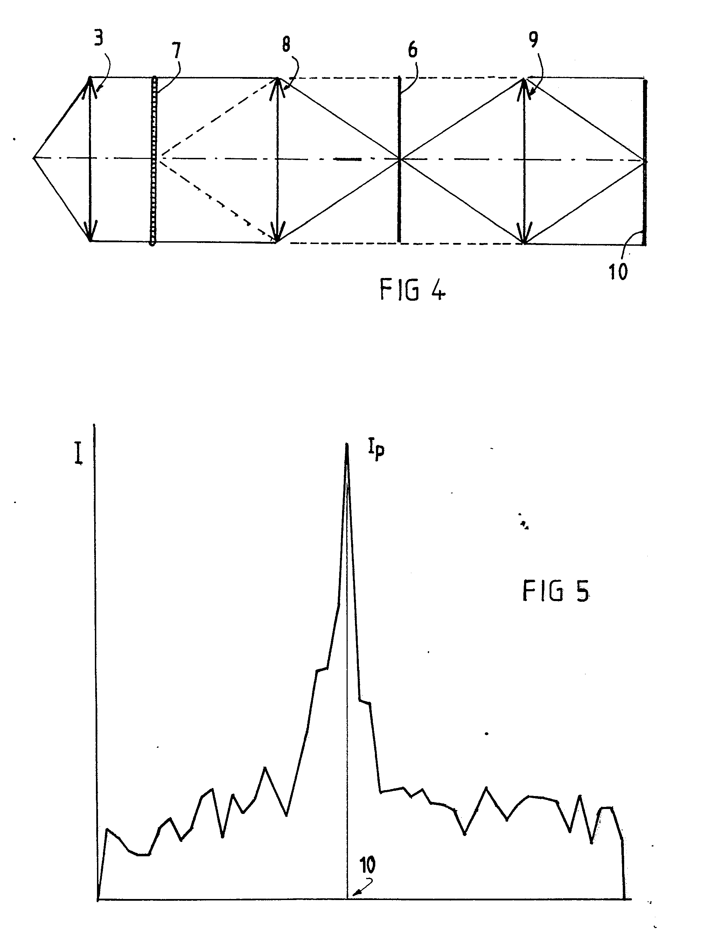

La figure 4 représente schématiquement le principe du montage : on trouve successivement la source laser 4 et son système élargisseur 3 portant le faisceau à 30 mm, le tissu 7 à contrôler placé dans le plan focal avant d'une première lentille de Fourier 8, l'hologramme 6 du tissu de référence 1 placé dans le plan focal arrière de la première lentille de Fourier 8 et dans le plan focal avant d'une seconde lentille 9 de Fourier, et enfin des moyens de détection 10 placés dans le plan focal arrière de la seconde lentille 9, correspondant au plan image où se réalise la fonction d'intercorrélation. Les moyens de détection consistent en une cellule CCD (Charge Coupled Device) qui est une barrette linéaire de 256 photoéléments de 13 x 13 micromètres associée aux registres de lecture. La carte électronique supportant la cellule est interfacée sur un mini calculateur capable par programme de comparer les données fournies, par exemple l'intensité recueillie dans la zone 10 (figure 5) correspondant au pic central de la fonction d'auto-corrélation à la valeur de l'intensité I, de ce même pic central 11. Les moyens de détection et de comparaison sont reliés à l'organe de commande de l'installation de défilement du tissu par exemple du métier à tisser de sorte que le métier est arrêté lorsque l'intensité mesurée est inférieure à un seuil de la valeur de l'intensité du pic central de la fonction d'auto-corrélation, par exemple 80%.

La source laser 4, l'élargisseur de faisceau 3, les deux lentilles de Fourier 8 et 9 , l'hologramme 6 et son support, la cellule CCD et l'ensemble de traitement sont fixes, seul est mobile un équipage constitué de deux miroirs situés de part et d'autre du tissu qui se déplace régulièrement sur toute la largeur du tissu à contrôler et qui collecte le flux transmis par le tissu 7 sur la première lentille de Fourier 8.

La fonction d'auto-corrélation montrée à la figure 5 est celle d'un tissu en toile de polyester ayant 33,3 fils de chaîne de titrage 17,3 tex par centimètre, 19,2 fils de trame de titrage 18,2 tex par centimètre, faisant 95 g/m2.

L'invention n'est pas limitée à l'exemple de réalisation qui vient d'être décrit. En particulier en mettant en oeuvre une grille, interposée entre le tissu à contrôler 7 et la première lentille de Fourier 8 et ayant un pas de l'ordre du dixième de millimètre, on multiplie le nombre de spectres de diffraction dans le plan focal arrière de la lentille 8. Cette disposition particulière permet de combiner l'exploitation de la fonction d'intercorrélation et l'exploitation des données de l'un des spectres de diffraction, après avoir placé par exemple une cellule CCD et ses moyens de détection au niveau de l'un des spectres obtenus. Elle permet également la classification des défauts en plaçant autant d'hologrammes que de défauts types recensés selon l'axe optique de chaque spectre de diffraction dans le plan focal avant des secondes lentilles de Fourier correspondantes.

## Revendications

. Procédé de contrôle automatique d'une surface textile en déplacement du type selon lequel on soumet un élément de la surface textile (7) à un flux lumineux cohérent, on traite optiquement la lumière transmise ou réfléchie de manière à obtenir le spectre de diffraction dudit élément (7) caractérisé en ce que on superpose le spectre de diffraction de l'élément de la surface textile (7) à contrôler à l'hologramme enregistré (6) d'une partie au moins de la même surface textile (1), dite de référence, dans le plan focal avant d'une lentille de Fourier (9) , moyennant quoi on réalise la fonction d'intercorrélation de la surface à côntroler (7) et de la référence enregistrée sur l'hologramme (6), et à exploiter les données de la fonction d'intercorrélation obtenue.

2. Procédé selon la revendication 1 caractérisé en ce que l'exploitation des données de la fonction d'intercorrélation consiste à comparer à l'intensité Ip du pic central de la fonction d'auto-corrélation les données de la fonction d'intercorrélation dans la zone (10) correspondant audit pic.

3. Procédé selon l'une des revendications 1 et 2 caractérisé en ce que l'hologramme enregistré est celui d'un élément de la surface textile prise dans son intégralité.

4. Procédé selon l'une des revendications 1 et 2 caractérisé en ce que l'hologramme enregistré est celui d'une partie répétitive de la surface textile, telle que le réseau de fils de chaîne, le réseau des fils de trame.

5. Procédé selon l'une des revendications 1 et 2 caractérisé en ce que l'hologramme enregistré est celui d'un élément de la surface présentant un défaut type.

6. Procédé selon la revendication 1 caractérisé en ce qu'il comprend une étape consistant à obtenir une pluralité de spectres de diffraction et en ce que l'on superpose différents hologrammes de référence sur différents spectres de diffraction et on exploite les données de chacune des fonctions d'intercorrélation obtenues.

7. Procédé selon l'une des revendications 1 et 6 caractérisé en ce que, comprenant une étape consistant à obtenir une pluralité de spectres de diffraction, on exploite également les données du spectre de diffraction, notamment les valeurs $I_0$ et

$$\frac{I_0}{I_1},$$

, $I_0$ étant l'intensité d'ordre 0 et $I_1$ l'intensité d'ordre 1 dudit spectre de diffraction.

0296924

Fig 1

Fig 2

FIG 3

0296924

0296924

FIG 4

FIG 5

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y,D | US-A-3 633 037 (P. LANGENBECK) <br> * Colonnes 3,4,6 * <br> --- | 1 | G 01 N 21/88 |
| Y | US-A-3 614 232 (E. MATHISEN) <br> * Colonnes 2-4 * <br> --- | 1,3 | |
| X | OPTICAL ENGINEERING, vol. 24, no. 5, septembre-octobre 1985, pages 731-734, Bellingham, Washington, US; R.L. FUSEK et al.: "Holographic optical processing for submicrometer defect detection" <br> * Paragraphes 2-4 * <br> --- | 1,3,6 | |
| X | APPLIED OPTICS, vol. 25, no. 23, 1er décembre 1986, pages 4473-4475, Washington, DC, US; S. VALLMITJANA et al.: "New multiple matched filter: design and experimental realization" <br> * Paragraphes 1-2 * <br> --- | 1,3,6 | |
| X | DE-A-2 707 538 (GREENWOOD MILLS) <br> * Pages 8-12 * <br> --- | 2,7 | DOMAINES TECHNIQUES RECHERCHES (Int. Cl.4) |
| A | OPTICS COMMUNICATIONS, vol. 47, no. 3, septembre 1983, pages 177-182, North-Holland, Amsterdam, NL; C. FERREIRA et al.: "Character recognition: A new multiple filter" <br> * Pages 177-178 * <br> ----- | 6 | G 01 N 21/88 <br> G 01 N 21/89 <br> G 02 B 27/46 |

Le présent rapport a été établi pour toutes les revendications

| Lieu de la recherche | Date d'achèvement de la recherche | Examinateur |
|---|---|---|
| LA HAYE | 26-09-1988 | BOEHM CH.E.D. |

EPO FORM 1503 03.82 (P0402)